# EUROPEAN PATENT APPLICATION

(11) **EP 3 200 000 A1**
(43) Date of publication of application: **02.08.2017**
(21) Application number: 16176441.0
(22) Date of filing: 27.06.2016
(51) Int. Cl.: G02B 13/00, H01L 27/146, G03B 21/00, G01B 11/25

(54) **PROJECTOR, ELECTRONIC DEVICE HAVING PROJECTOR AND ASSOCIATED MANUFACTURING METHOD**

(30) Priority: 28.12.2015 US 201562271354 P
(71) Applicant: Himax Technologies Limited, Tainan City 74148 (TW)
(72) Inventor: HSIAO, Yun-Lien, 74148 Tainan City (TW); LIN, Han-Ching, 74148 Tainan City (TW); LU, Yin-Dong, 74148 Tainan City (TW); HSU, Shu-Hao, 74148 Tainan City (TW); HSUEH, Chuan-Ching, 74148 Tainan City (TW)
(74) Representative: Hoefer & Partner Patentanwälte mbB

(57) **Abstract**

A projector (100) includes a laser module (1 10) for generating a laser beam and a wafer-level optics. The wafer-level optics includes a first substrate (120), a first collimator lens (122) and a diffractive optical element (140), wherein the first collimator lens (122) is manufactured on a first surface of the first substrate (120), and is arranged for receiving the laser beam from the laser module (1 10) to generate a collimated laser beam; and the collimated laser beam directly passes through the diffractive optical element (140) to generate a projected image of the projector (100).

## Description

### Background of the Invention

### 1. Field of the Invention

The present invention relates to a projector, and more particularly, to a projector having a diffractive optical element.

### 2. Description of the Prior Art

A conventional projector generally needs to have a laser source, a collimator, a diffractive optical element and a reflector/prism to generate a projected image, where these four elements are independent parts in the project. However, because an electronic device such as a smart phone or a pad becomes thinner, a size of the project having these elements is too large to be positioned into the electronic device, causing difficulties to the projector design.

In addition, if the electronic device would like to capture a 3D image, two camera modules are required to capture two images with different angles to calculate the depth information. However, two camera modules may increase the manufacturing cost, and the calculation of the depth information may seriously increase a loading of a processor within the electronic device.

### Summary of the Invention

It is therefore an objective of the present invention to provide a projector having a diffractive optical element imprinted on an internal substrate, which does not have any prism or reflective element and have a low thickness, to solve the above-mentioned problem.

This is achieved by a projector according to claim 1, an electronic device according claim 9, and a method for manufacturing a projector according to claim 11. The dependent claims pertain to corresponding further developments and improvements.

As will be seen more clearly from the detailed description following below, a projector comprises a laser module for generating a laser beam and a wafer-level optics. The wafer-level optics comprises a first substrate, a first collimator lens and a diffractive optical element, wherein the first collimator lens is manufactured on a first surface of the first substrate, and is arranged for receiving the laser beam from the laser module to generate a collimated laser beam; and the collimated laser beam directly passes through the diffractive optical element to generate a projected image of the projector.

As will be seen more clearly from the detailed description following below, an electronic device comprises a projector, a camera module and a processor. The projector comprises a laser module for generating a laser beam and a wafer-level optics. The wafer-level optics comprises a first substrate, a first collimator lens and a diffractive optical element, wherein the laser beam directly passes through the first collimator lens and the diffractive optical element to generate a projected image of the projector to a region of a surrounding environment. The camera module is arranged for capturing the region of the surrounding environment to generate image data. The processor is arranged for analyzing the image data to obtain depth information of the image data.

As will be seen more clearly from the detailed description following below, a method for manufacturing a projector comprises: providing a first substrate; manufacturing a first collimator lens on the first substrate; providing a second substrate; imprinting a diffractive optical element on the second substrate; and assembling the first substrate, the second substrate and a laser module to make a laser beam generated from the laser module directly passes through the first collimator lens and the diffractive optical element to generate a projected image of the projector.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a projector according to a first embodiment of the present invention.
FIG. 2 is a diagram illustrating a projector according to a second embodiment of the present invention.
FIG. 3 is a diagram illustrating a projector according to a third embodiment of the present invention.
FIG. 4 is a diagram illustrating a projector according to a fourth embodiment of the present invention.
FIG. 5 shows a side view and a top view of part of the DOE according to one embodiment of the present invention.
FIGs. 6-8 show a manufacturing method of the wafer-level optics shown in FIG. 1 according to one embodiment of the present invention.
FIG. 9 is a diagram illustrating an electronic device according to one embodiment of the present invention.

### Detailed Description

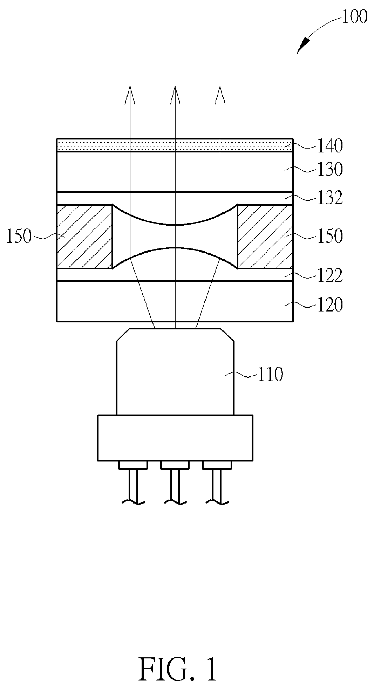

Please refer to FIG. 1, which is a diagram illustrating a projector 100 according to a first embodiment of the present invention. As shown in FIG. 1, the projector 100 comprises a laser module 110 and a wafer-level optics, where the wafer-level optics comprises a substrate 120, a collimator lens 122 imprinted on a surface of the substrate 120, a substrate 130, a collimator lens 132 imprinted on a surface of the substrate 130, a diffractive optical element (DOE) 140 imprinted on another surface of the substrate 130, and spacers 1 50. In this embodiment, the projector 100 is arranged to project an image with a special pattern, and the projector 100 is positioned in an electronic device such as a smart phone or a pad.

In the projector 100 shown in FIG. 1, the laser module 110 is arranged to generate a laser beam, and particularly, the laser beam is an infrared light. The collimator lenses 122 and 132 are convex lenses, and are arranged to receive the laser beam from the laser module 110 to generate a collimated laser beam (parallel rays), where the collimated laser beam is substantially perpendicular to the surface of the substrate 1 30 and the DOE 140. The DOE 140 can serve as a pattern generator, and the collimated laser beam directly passes through the DOE 140 to generate a projected image, where the projected image may have a special pattern set by the DOE 140.

In the embodiment shown in FIG. 1, the laser beam directly passes through the collimator lenses 122 and 132 and the DOE 140 to become the projected image having the special pattern, and the laser beam is not directed by any prism or any other reflective/refractive element. By using this structure, the projector 100 has a low thickness, and is allowed to be positioned in the thinner electronic device.

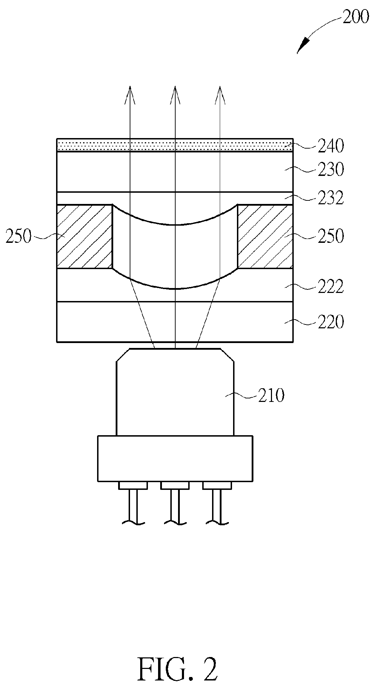

Please refer to FIG. 2, which is a diagram illustrating a projector 200 according to a second embodiment of the present invention. As shown in FIG. 2, the projector 200 comprises a laser module 210 and a wafer-level optics, where the wafer-level optics comprises a substrate 220, a concave collimator lens 222 imprinted on a surface of the substrate 220, a substrate 230, a convex collimator lens 232 imprinted on a surface of the substrate 230, a DOE 240 imprinted on another surface of the substrate 230, and spacers 250. The projector 200 is similar to the projector 100 shown in FIG. 1 but the collimator lens 222 is a concave lens.

In an alternative embodiment, the collimator lens 222 can be a convex lens while the collimator lens 232 is a concave lens.

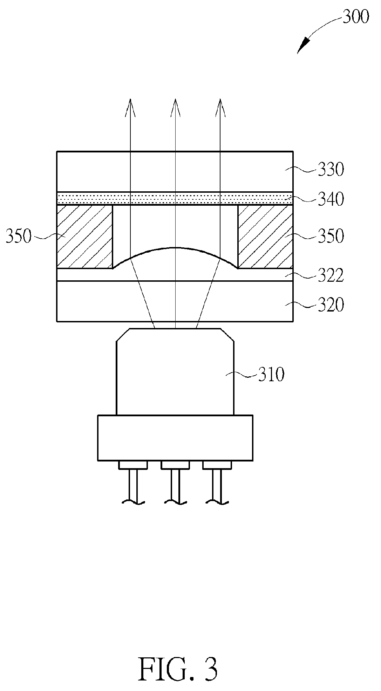

Please refer to FIG. 3, which is a diagram illustrating a projector 300 according to a third embodiment of the present invention. As shown in FIG. 3, the projector 300 comprises a laser module 310 and a wafer-level optics, where the wafer-level optics comprises a substrate 320, a convex collimator lens 322 imprinted on a surface of the substrate 320, a substrate 330, a DOE 340 imprinted on a surface of the substrate 330, and spacers 350. The projector 300 is similar to the projector 100 shown in FIG. 1 but no collimator lens is manufacturing on a surface of the substrate 330.

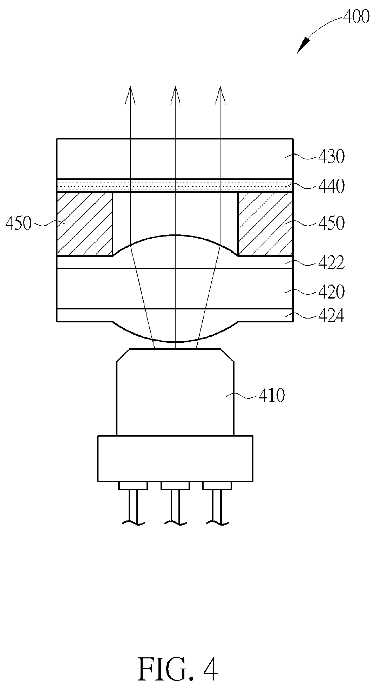

Please refer to FIG. 4, which is a diagram illustrating a projector 400 according to a fourth embodiment of the present invention. As shown in FIG. 4, the projector 400 comprises a laser module 410 and a wafer-level optics, where the wafer-level optics comprises a substrate 420, a convex collimator lens 422 imprinted on a surface of the substrate 420, another convex collimator lens 424 imprinted on another surface of the substrate 420, a substrate 430, a DOE 440 imprinted on a surface of the substrate 430, and spacers 450. The projector 400 is similar to the projector 300 shown in FIG. 3 but two collimator lenses 422 and 424 are manufacturing on two opposite surfaces of the substrate 430.

In an alternative embodiment, the one of the collimator lenses 422 and 424 can be a convex lens while the other one of the collimator lenses 422 and 424 is a concave lens.

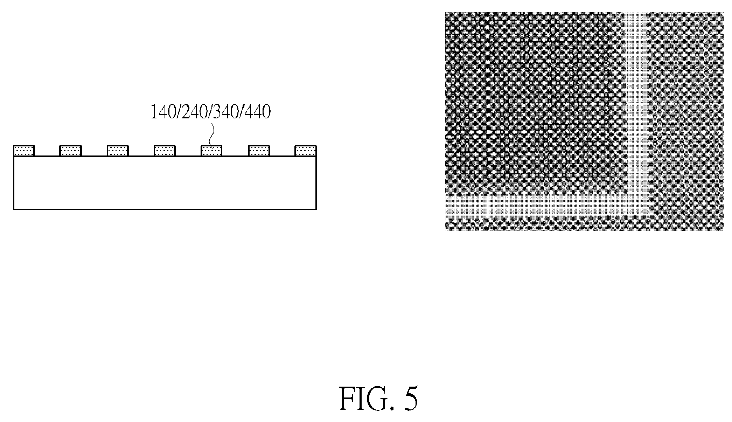

In the above embodiments, the DOEs 140/240/340/440 are manufactured by nanoimprint semiconductor lithography. FIG. 5 shows a side view and a top view of part of the DOEs 140/240/340/440 according to one embodiment of the present invention.

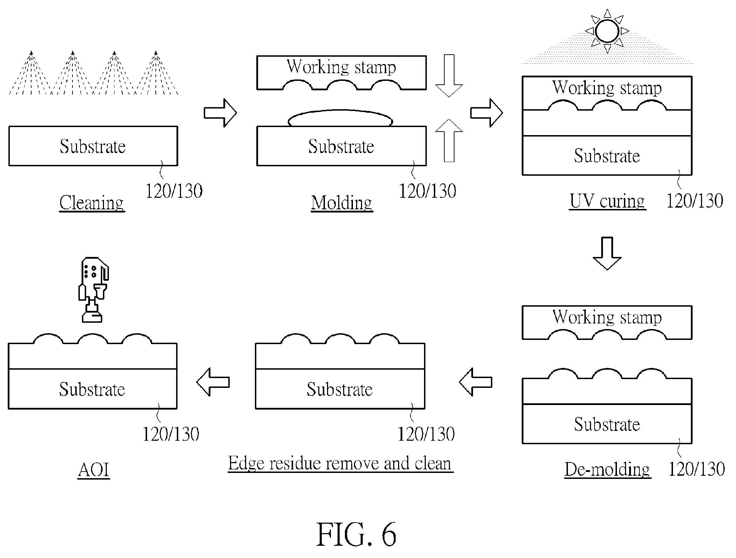

FIGs. 6-8 show a manufacturing method of the wafer-level optics shown in FIG. 1 according to one embodiment of the present invention. FIG. 6 shows the details of imprinting the collimator lenses 122 and 132 on the substrates 1 20 and 130, respectively. As shown in FIG. 6, in the cleaning step, the substrate 120/130 is cleaned for further process. In the molding step, an ultraviolet (UV) curable polymer is injected or dispensed on a surface of the substrate 120/130, and a working stamp is used to shape the UV curable polymer. In the UV curing step, an ultraviolet ray is used to cure the UV curable polymer, wherein the cured layer serves as the collimator lens 122/132. In the de-molding step, the working stamp is removed. In the following step, edge residue removing and cleaning step is performed. In the inspection step, an automated optical inspection (AOI) is used to scan the substrate 120/130 under test for both catastrophic failure and quality defects. By using the steps shown in FIG. 6, the substrate 120 with the collimator lens 122 and the substrate 130 with the collimator lens 132 shown in FIG. 1 are made.

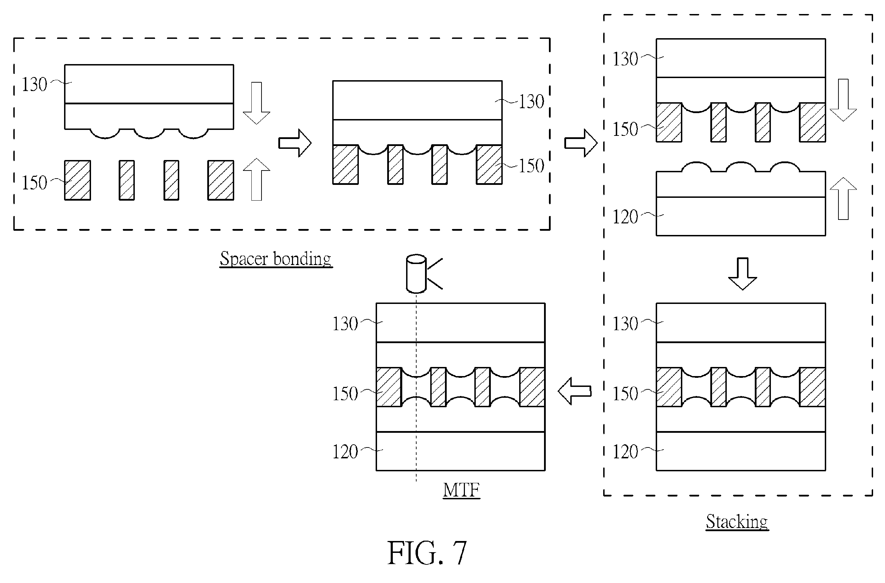

FIG. 7 shows details of assembling the substrates 120 and 130. In the first step, the substrate 130 is bonded with the spacers 1 50. In the following stacking step, by using a charge-coupled device (CCD) alignment system, the substrate 120 is assembled with the substrate 130 via the spacers 1 50. In the following step, a modulation transfer function (MTF) test is performed to inspect the image performance of the lenses.

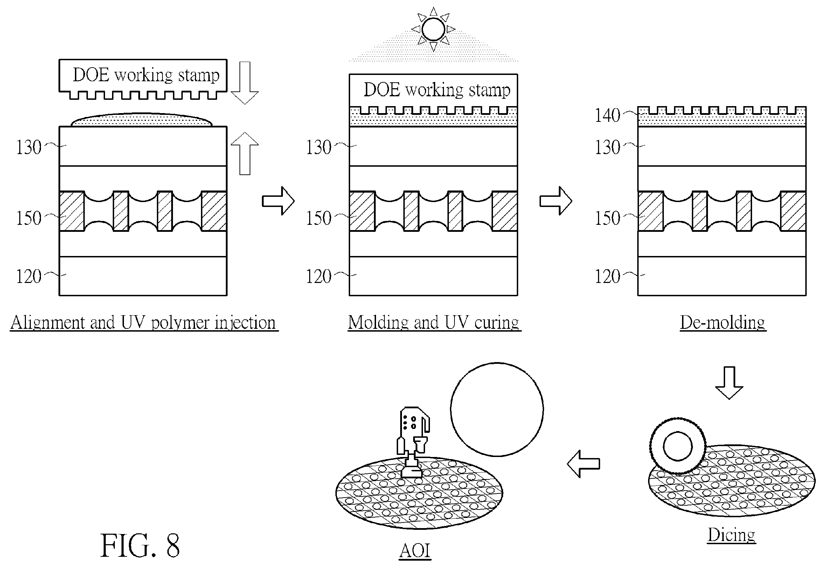

FIG. 8 shows details of imprinting the DOE 140 and the following assembling steps. As shown in FIG. 8, in the first step, the UV curable polymer is injected or dispensed on the surface of the substrate 130, and a DOE working stamp is used to shape the UV curable polymer by using the CCD alignment system. In the second step, the ultraviolet ray is used to cure the UV curable polymer, wherein the cured layer serves as the DOE 140. In the third step, the DOE working stamp is removed. In the fourth step, the assembled device is diced into a plurality of squares, where each square serves as the wafer-level optics shown in FIG. 1. In the fifth step, the AOI is used to scan the substrate 120/130 under test for both catastrophic failure and quality defects. Finally, the squares (i.e. the plurality of wafer-level optics) are sorted for further process.

The embodiments shown in FIGs. 2-4 can be manufactured by the steps that are similar to the steps shown in FIGs. 6-8. Because a person skilled in the art should understand the manufacturing steps of the embodiments shown in FIGs. 2-4 after reading the above-mentioned disclosure, further descriptions are omitted here.

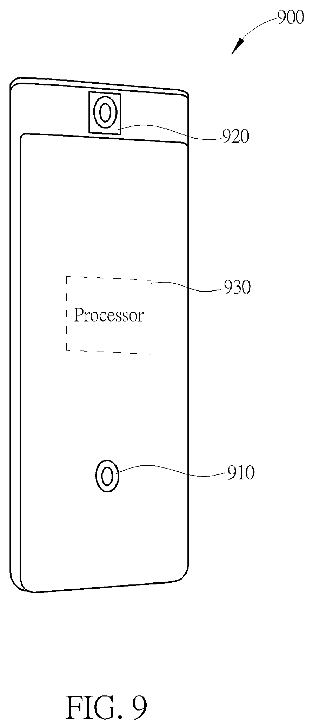

FIG. 9 is a diagram illustrating an electronic device 900 according to one embodiment of the present invention. As shown in FIG. 9, the electronic device 900 is a smart phone, and the electronic device 900 comprises a projector 910, a camera module 920 and a processor 930. In this embodiment, the projector 910 can be implemented by any one of the projector shown in FIGs. 1-4, and the projector 910 is embedded in a back side of the electronic device 900, and is used to project an infrared image with a special pattern to a region of a surrounding environment. Then, the camera module 920 captures the region of the surrounding environment to generate image data. Finally, the processor 930 analyzes the image data to obtain depth information of the image data. In the embodiment shown in FIG. 9, the electronic device 900 can simply generate a 3D image by using the projector 920 and only one camera module 930.

Briefly summarized, in the projector of the present invention, by imprinting the DOE on an internal substrate of the projector, the thickness of the projector is low enough to be embedded into a thinner electronic device. In addition, by using the projector of the present invention into the electronic device, the electronic device can build a 3D image by merely analyzing an image captured by one camera module. Hence, the manufacturing cost and the loading of the processor can be improved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A projector (100, 200, 300, 400), comprising:
a laser module (110, 210, 310, 410), for generating a laser beam;
**characterized by:**
a wafer-level optics, comprising:
a first substrate (120/130, 220/230, 320/330, 420/430);
a first collimator lens (122/132, 222/232, 322, 422) manufactured on a first surface of the first substrate (120/130, 220/230, 320/330, 420/430), for receiving the laser beam from the laser module (110, 210, 310, 410) to generate a collimated laser beam; and
a diffractive optical element (140, 240, 340, 440), wherein the collimated laser beam directly passes through the diffractive optical element (140, 240, 340, 440) to generate a projected image of the projector (100, 200, 300, 400).

2. The projector (100, 200, 300, 400) of claim 1, **characterized in that** the collimated laser beam does not directed by any prism or refractive element or reflective element.

3. The projector (100, 200) of claim 1, **characterized in that** the diffractive optical element (140, 240) is imprinted on a second surface of the first substrate (130, 230), and the second surface is opposite to the first surface.

4. The projector (100, 200) of claim **3, characterized in that** the second surface of the first substrate (130, 230) is substantially perpendicular to the collimated laser beam.

5. The projector (100, 200, 300, 400) of claim 1, **characterized in that** the wafer-level optics further comprises:
a second substrate (1 30, 230, 330, 430), wherein the diffractive optical element (140, 240, 340, 440) is imprinted on a surface of the second substrate (1 30, 230, 330, 430), and the surface of the second substrate (130, 230, 330, 430) is substantially perpendicular to the collimated laser beam.

6. The projector (100, 200) of claim 5, **characterized in that** the wafer-level optics further comprises:
a second collimator lens (132, 232) manufactured on another surface of the second substrate (130, 230);
wherein the first collimator lens (122, 222) and the second collimator lens (132, 232) receive the laser beam from the laser module to generate the collimated laser beam.

7. The projector (100, 200) of claim 6, **characterized in that** at least one of the first collimator lens (122, 222) and the second collimator lens (132, 232) is a convex lens.

8. The projector (100, 200, 300, 400) of claim 1, **characterized in that** the laser beam is an infrared light.

9. An electronic device (900), **characterized by:**
a projector (100, 200, 300, 400, 910), comprising:
a laser module (110, 210, 310, 410), for generating a laser beam; and
a wafer-level optics comprising a first collimator lens (122/132, 222/232, 322, 422) and a diffractive optical element (140, 240, 340, 440), wherein the laser beam directly passes through the first collimator lens (122/132, 222/232, 322, 422) and the diffractive optical element (140, 240, 340, 440) to generate a projected image of the projector (100, 200, 300, 400, 910) to a region of a surrounding environment; and
a camera module (920), for capturing the region of the surrounding environment to generate image data; and
a processor (930), for analyzing the image data to obtain depth information of the image data.

10. The electronic device (900) of claim 9, **characterized in that** the wafer-level optics comprises:
a first substrate (120/130, 220/230, 320/330, 420/430), wherein the first collimator lens (122/132, 222/232, 322, 422) is manufactured on a first surface of the first substrate (120/130, 220/230, 320/330, 420/430), and the first collimator lens (122/132, 222/232, 322, 422) is arranged for receiving the laser beam from the laser module (110, 210, 310, 410) to generate a collimated laser beam, and the collimated laser beam directly passes through the diffractive optical element (140, 240, 340, 440) to generate the projected image of the projector (100, 200, 300, 400, 910).

11. A method for manufacturing a projector (100, 200, 300, 400), **characterized by** the method comprises the steps of:
providing a first substrate (1 20, 220, 320, 420);
manufacturing a first collimator lens (1 22, 222, 322, 422) on the first substrate (1 20, 220, 320, 420);
providing a second substrate (1 30, 230, 330, 430);
imprinting a diffractive optical element (140, 240, 340, 440) on the second substrate (1 30, 230, 330, 430); and
assembling the first substrate (120, 220, 320, 420), the second substrate (1 30, 230, 330, 430) and a laser module (1 10, 210, 310, 410) to make a laser beam generated from the laser module (110, 210, 310, 410) directly passes through the first collimator lens (1 22, 222, 322, 422) and the diffractive optical element (140, 240, 340, 440) to generate a projected image of the projector (100, 200, 300, 400).

12. The method of claim 11, **characterized in that** the diffractive optical element (140, 240) is imprinted on a first surface of the second substrate (130, 230), and the method further comprises:
manufacturing a second collimator lens (1 32, 232) on a second surface of the second substrate (130, 230), wherein the second surface is opposite to the first surface.

13. The method of claim 12, **characterized in that** the second surface of the first substrate (1 20, 220) is substantially perpendicular to the collimated laser beam.

14. The method of claim 12, **characterized in that** at least one of the first collimator lens (122, 222) and the second collimator lens (132, 232) is a convex lens.

15. The method of claim 11, **characterized in that** the laser beam is an infrared light.
